# EUROPEAN PATENT APPLICATION

(11) **EP 0 769 639 A2**
(43) Date of publication of application: **23.04.1997**
(21) Application number: 96116020.7
(22) Date of filing: 07.10.1996
(51) Int. Cl.: F16H 45/02

(54) **A torque converter with a lock-up mechanism**

(30) Priority: 09.10.1995 JP 261667/95
(71) Applicant: TOYOTA JIDOSHA KABUSHIKI KAISHA, Aichi-ken (JP)
(72) Inventor: Murata, Kiyohito, Toyota-shi, Aichi (JP)
(74) Representative: KUHNEN, WACKER & PARTNER

(57) **Abstract**

A torque converter with a lock-up mechanism is improved to employ fewer thrust bearings. A front cover (1) is connected with an input member which is connected to an output shaft of an engine and a pump (3) is connected with said front cover (1). A hub (9) is connected with an output member (10). A turbine (4,5) which is connected with said hub (9) circulates hydraulic operating fluid in the pump (3) and the turbine (4,5) in cooperation with the pump (3) to thereby hydraulically couple the input member and the output member (10). A lock-up clutch (6) which is connected with the hub (9) and extended in an area between the turbine (4,5) and the front cover (1) is selectively engaged with the front cover (1) for directly coupling the input member and the output member (10) without use of the circulating hydraulic operating oil. An oil passage (110) introduces hydraulic oil to an oil chamber (102) defined between the front cover (1) and the lock-up clutch (6). The hub (9) has a free surface opposing to the front cover (1) for receiving oil pressure of the hydraulic operating oil introduced through the oil passage (110) in cooperation with a surface of the lock-up clutch (6) so as to bear a force, generated by the turbine (4,5), pushing the hub (9) toward said front cover (1) and prevent the hub (9) from contacting the front cover (1).

## Description

### BACKGROUND OF THE INVENTION

### 1. Field of the Invention

The present invention relates to a torque converter with a lock-up clutch and, particularly, to a construction of a lock-up clutch.

### 2. Description of the Prior Art

In a torque converter with a lock-up clutch, many thrust bearings are generally employed for rotatably supporting members which are axially adjacently located, for example a thrust bearing disposed between a turbine hub and a front cover (TOYOTA CORONA New Car Features for Japanese Model, published in December, 1987).

However, this results in higher cost to produce the torque converter.

### SUMMARY OF THE INVENTION

In view of the above-mentioned problem, the object of the present invention is to provide a torque converter with lock-up clutch which employs fewer thrust bearings.

According to the present invention there is provided a torque converter with a lock-up mechanism which comprises a front cover which is connected with an input member connected to an output shaft of an engine, a pump which is connected with said front cover, a hub which is connected with an output member, a turbine which is connected with the hub and circulates hydraulic operating fluid in the pump and the turbine in cooperation with the pump to thereby hydraulically couple the input member and the output member, a lock-up clutch which is connected with the hub and extends in an area between the turbine and the front cover and is selectively engaged with the front cover for directly coupling the input member and the output member without use of the circulating hydraulic operating oil, and an oil passage for introducing hydraulic operating oil to an oil chamber defined between the front cover and the lock-up clutch. The hub has a free surface opposing to the front cover for receiving oil pressure of the hydraulic operating oil introduced through the oil passage in cooperation with a surface of the lock-up clutch so as to bear a force generated by the turbine pushing the hub toward said front cover and prevent the hub from contacting the front cover.

The present invention will be better understood from the description of preferred embodiments of the invention set forth below, together with the accompanying drawings.

### BRIEF DESCRIPTION OF THE DRAWINGS

In the drawings:
Fig. 1 is a cross-sectional view illustrating a construction of the first embodiment.
Fig. 2 is a cross-sectional view illustrating a construction of the second embodiment.
Fig. 3 is a cross-sectional view illustrating a construction of variation of the second embodiment.
Fig. 4 is a cross-sectional view illustrating a construction of a prior art.
Fig. 5 is a cross-sectional view illustrating a construction of the third embodiment.
Fig. 6 is a cross-sectional view illustrating a construction of a variation of the third embodiment.
Fig. 7 is a cross-sectional view illustrating a construction of another prior art.

### DESCRIPTION OF THE PREFERRED EMBODIMENTS

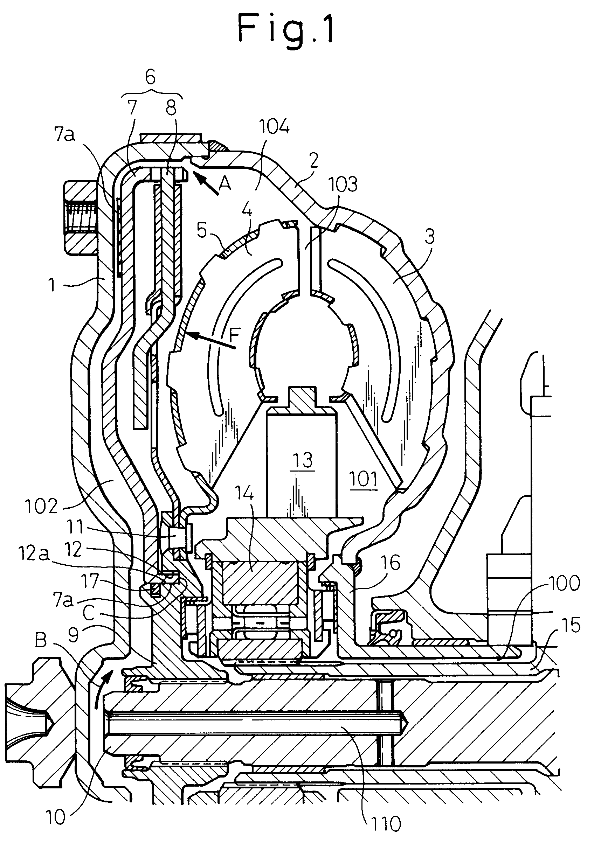

Fig. 1 illustrates a construction of the first embodiment of the present invention.

In Fig. 1, a reference numeral 1 represents a front cover. The front cover 1 is connected to an output shaft of an engine (not shown). A pump cover 2 is fixed to the front cover 1. A plurality of pump impellers are attached to the pump cover 2.

A plurality of turbine blades are attached to a turbine cover 5 for obtaining a hydraulic torque transmission.

A lock-up clutch 6 is composed of lock-up piston 7 and a damper plate 8. The lock-up piston 7 and the damper plate 8 are axially movably and unmovably in rotational direction connected to each other at a radially outer end portion.

A turbine hub 9 is splined to the output shaft 10. The turbine cover 5 and the damper plate 8 are fixed to the outer part of the turbine hub 9 by rivets 11. A guide 12 is formed on the inner part of the turbine hub 9. An end surface 7a of the lock-up piston 7 slidably contacts with a guide surface 12a of the guide 12 formed on the turbine hub 9 between inner end and the rivetting part.

A stator 13 is splined to a fixed member 15 through a one-way clutch 14. The fixed member is connected to a transmission housing (not shown).

A rear cover 16 is disposed radially outside of the fixed member 15 forming an oil passage 100 therebetween. The oil passage 100 is connected to an oil chamber 101 formed between pump impeller 3 and stator 13.

An oil passage 110 formed in the output shaft 10 is connected to an oil chamber 102 formed between the front cover 1 and the lock-up piston 7.

When the hydraulic operating oil is supplied through the oil passage 100, the hydraulic operating oil reaches the oil chamber 101 through a clearance between the rear cover 16 and the one-way clutch 14, and a clearance between the pump cover 2 and a base of the stator 13. Then the hydraulic operating oil flows together with a flow flowing through passages formed between pump impellers 3 so that it reaches the oil passage 103 formed between outer ends of the pump impellers 3 and the turbine blades 4. Then the hydraulic operating oil flows into an oil chamber 104 formed by turbine cover 5 and the pump cover 2 and the damper plate 8. Then, the hydraulic operating oil flows into the oil chamber 102 through a clearance between the lock-up piston 7 and the front cover 1 as shown by arrow A.

In the clearance, a friction material 7a which is attached on the surface of the lock-up piston 7 throttles the flow of the hydraulic operating oil from the oil chamber 104 to the oil chamber 102. Thereby, the oil pressure acting on the side of the turbine cover 5 of the lock-up piston 7 becomes higher than the oil pressure acting on the side of the front cover 1 of the lock-up piston 7. Accordingly, the lock-up piston 7 is pushed to the front cover 1 and engaged therewith. Thus, the front cover 1 and the output shaft 10 are directly coupled so that a "Lock-up ON" state, in which no fluid is used for coupling, is obtained.

On the other hand, when the hydraulic operating oil is supplied through the oil passage 110, the hydraulic operating oil flows as shown by arrow B. Therefore, the hydraulic operating fluid flows from the oil chamber 102 to the oil chamber 104. Wherein, a friction material 7a throttles the flow, same as the above described case. Thereby, the oil pressure acting on the side of the front cover 1 of the lock-up piston 7 becomes higher than the oil pressure acting on the side of the turbine cover 5. Accordingly, the lock-up piston 7 is pushed to the turbine cover 5 and disengaged from the front cover 1. Thus, a "Lock-up OFF" state is obtained.

In this "Lock-up OFF" state, the lock-up piston 7 pushes turbine hub 9 to the right in the figure so that the turbine hub 9 is prevented from contacting the front cover 1.

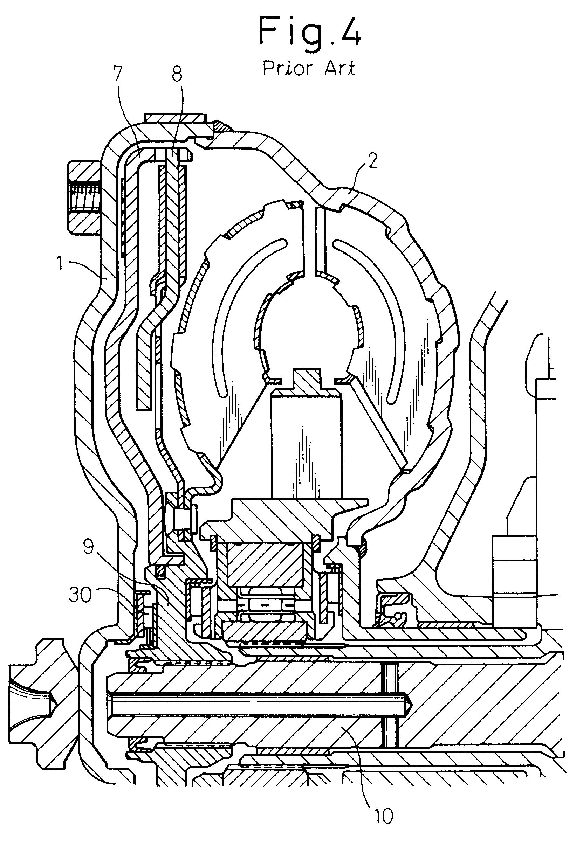

As described above, in this first embodiment of the present invention, the turbine hub 9 can be securely positioned without employing a thrust bearing 30 between the front cover 1 and the turbine hub 9 as in the case of the prior art which is shown in Fig. 4.

It should be noted that a force shown by arrow F is always acting on turbine cover 5. The force F acts on inner end of lock-up piston 7 through the turbine hub 9, thereby the inner part of the lock-up piston 7 is always pushed to the left in the figure. On the other hand, the outer part of the lock-up piston 7 is always pushes to the right in the figure regardless of "Lock-up OFF" state or "Lock-up ON" state, i.e., the outer part of the lock-up piston is pushed to the right by a reaction force of engaging part, at "Lock-up OFF" state, and pushed to the right by the pressure of hydraulic operating oil.

Accordingly, the lock-up piston 7 tends to deform to move the inner part to the left in the figure and to move the outer part to the right in the figure. Therefore, the lock-up piston should be made to have a rigidity sufficient to prevent the above described deformation. The lock-up piston 7 will undesirably contact with the front cover 1 when the lock-up piston 7 has insufficient rigidity and a large amount of the above described deformation occurs.

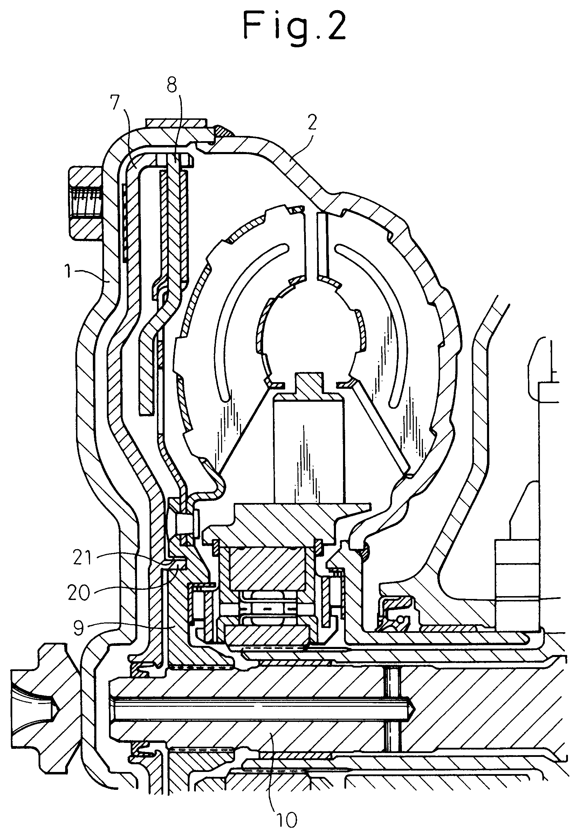

Fig. 2 illustrates a construction of the second embodiment of the present invention. In this second invention, the lock-up piston 7 is extended in the inner direction compared to the first embodiment. Accordingly the oil pressure receiving area is enlarged, and thereby a quicker shift from "Lock-up ON" to "Lock-up OFF" can be obtained. Further, seal ring 17 (see Fig. 1) which is employed in the first embodiment is deleted, and thereby the cost can be reduced.

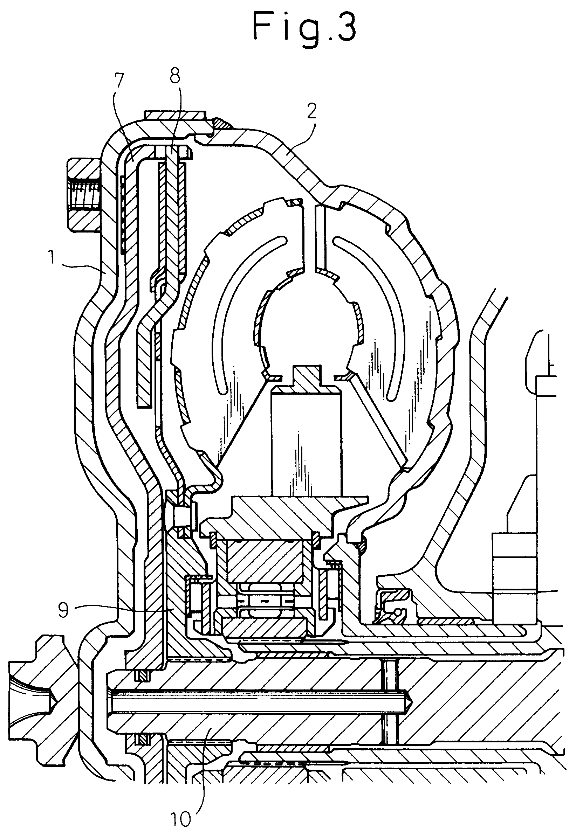

Fig. 3 illustrates a variation of the second embodiment, in which the lock-up piston 7 is formed to be directly slidably connected to the output shaft 10, instead to a protuberance 20 (see Fig. 2) protruded from the lock-up piston 7, and a guide 21 (see Fig. 2), formed in the turbine hub 5, is deleted.

Fig. 4 illustrates a prior art corresponding to the first embodiment and the second embodiment and the variation thereof. As shown in Fig. 4 the prior art employs a thrust bearing 30 between the front cover 1 and the turbine hub 9.

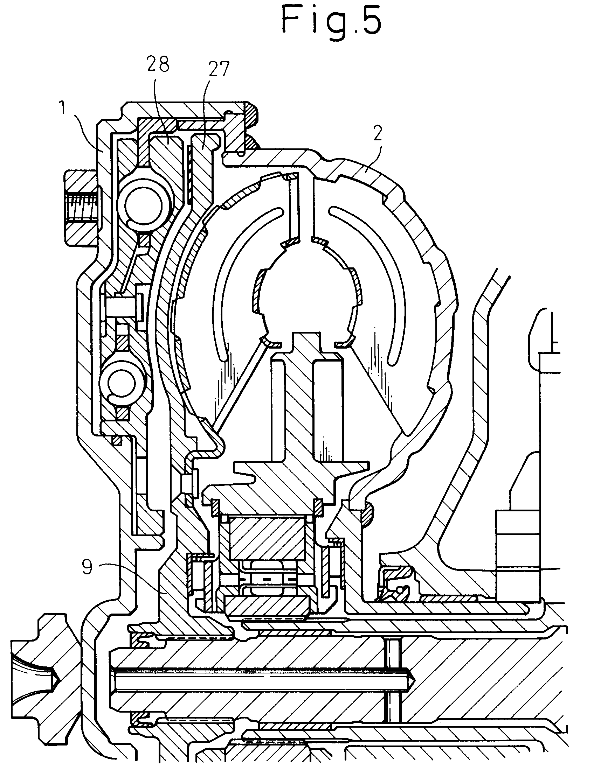

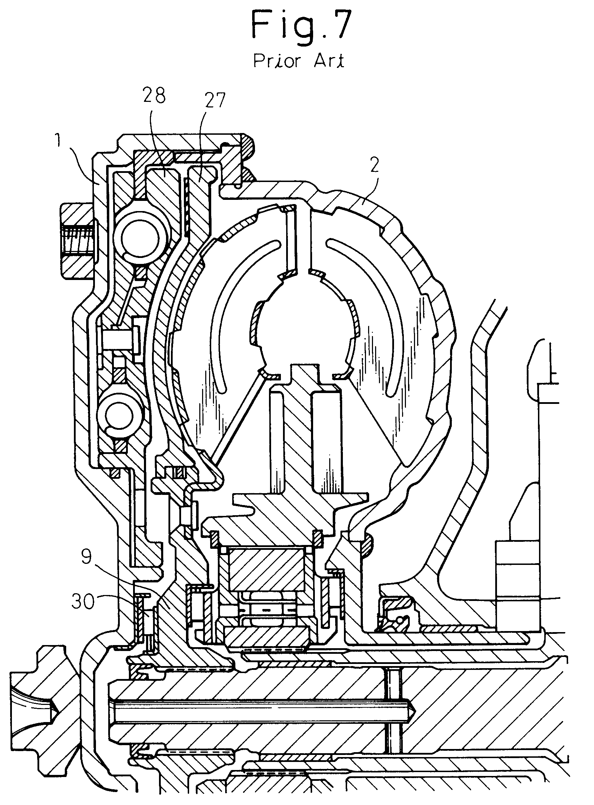

Fig. 5 illustrates a third embodiment of the present invention. The third embodiment applies the present invention to the prior art of a type shown in Fig. 7, i.e. the prior art in which a damper plate 28 is engaged to the front cover 1. In the third embodiment the thrust bearing 30, which is employed in the prior art shown in Fig. 7 is deleted, same as the first embodiment and the second embodiment and the variation thereof. Further, turbine hub 9 and the lock-up piston 27 are united, while they are separated in the prior art.

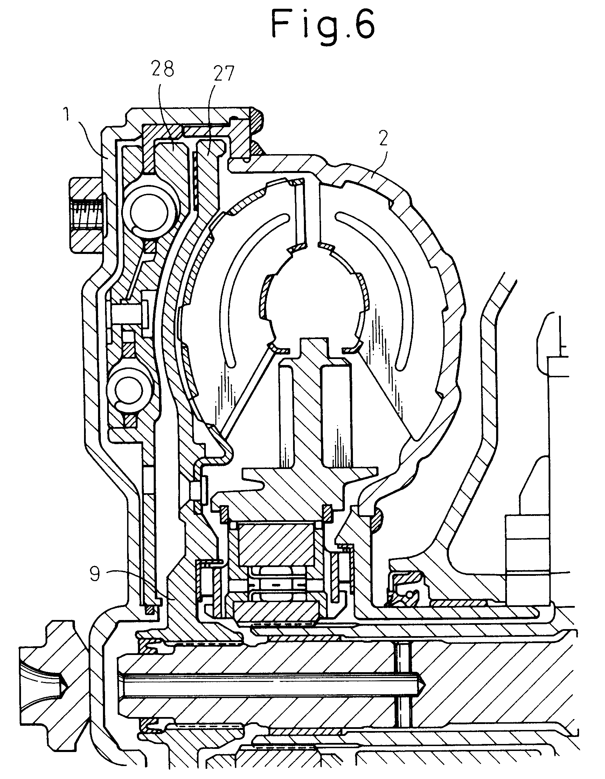

Fig. 6 is a variation of the third embodiment, in which the damper plate 28 is extended to the inner side.

The above described third embodiment and the variation thereof have same advantage, over the prior art shown in Fig. 7, as the one which the first embodiment and the second embodiment and the variation thereof show over the prior art shown in Fig. 4.

The present invention is constructed and operates as described above, thereby the required number of thrust bearings is decreased and the cost is reduced.

## Claims

1. A torque converter with a lock-up mechanism comprising:
a front cover connected with an input member, said input member being connected to an output shaft of an engine;
a pump connected with said front cover,
a hub connected with an output member,
a turbine connected with said hub, said turbine circulating hydraulic operating fluid in said pump and said turbine in cooperation with said pump for thereby hydraulically coupling said input member and said output member;
a lock-up clutch connected with said hub and extended in an area between said turbine and said front cover, said lock-up clutch selectively engaged with said front cover for directly coupling said input member and said output member without use of said circulating hydraulic operating fluid; and
an oil passage for introducing hydraulic operating oil to an oil chamber defined between said front cover and said lock-up clutch,
wherein said hub has a free surface opposing to said front cover for receiving oil pressure of said hydraulic operating oil introduced through said oil passage in cooperation with a surface of said lock-up clutch so as to bear a force generated by said turbine pushing said hub toward said front cover and prevent said hub from contacting said front cover.

2. A torque converter with a lock-up clutch according to claim 1, wherein said lock-up clutch is composed of a damper plate which is fixed to said hub and a clutch plate which is disposed between said damper plate and said front cover and axially slidably fitted to said damper plate at the outer end.

3. A torque converter with a lock-up clutch according to claim 2, wherein said damper plate is fixed to said hub by rivetting and laid clutch plate is slidably fitted to a guide formed on said hub between the rivetting point and the inner end.

4. A torque converter with a lock-up clutch according to claim 3 wherein said clutch plate extends inward to a same extent as said hub.

5. A torque converter with a lock-up clutch according to claim 2, wherein said clutch plate is slidably fitted to said output shaft at the inner end.

6. A torque converter with a lock-up clutch according to claim 1, wherein said lock-up clutch is composed of a damper plate which is slidably fitted to said front cover at the inner end and a clutch plate which is fixed to said hub.

7. A torque converter with a lock-up clutch according to claim 6, wherein said damper plate is slidably fitted to said front cover at two radially different positions which are both apart from the radial inner end of said hub.

8. A torque converter with a lock-up clutch according to claim 6, wherein said damper plate is slidably fitted to said front cover at one position which is close to the inner end of said hub.
